# EUROPEAN PATENT APPLICATION

(11) **EP 4 624 372 A1**
(43) Date of publication of application: **01.10.2025**
(21) Application number: 24167681.6
(22) Date of filing: 28.03.2024
(51) Int. Cl.: B65G 1/04, B65G 1/06, B65G 63/00, B65G 63/04

(54) **A ROBOTIC VEHICLE FOR USE IN AN AUTOMATED STORAGE AND RETRIEVAL SYSTEM**

(71) Applicant: AUTOSTORE TECHNOLOGY AS, 5578 Nedre Vats (NO)
(72) Inventor: ENGELSGJERD, Svein, 5578 Nedre Vats (NO)
(74) Representative: Kilburn & Strode LLP

(57) **Abstract**

A robotic vehicle (502) for use in an automated storage and retrieval system. The robotic vehicle (502) comprises a body (300), a lifting device (508) and a gripping device (504). The lifting device (508) is arranged to lower the gripping device (504) from the body (300) and raise the gripping device towards the body. The gripping device (504) is arranged to engage and disengage a container (112) to raise and lower the container with the gripping device when so engaged. The lifting device (508) comprises an engagement device for releasably engaging the gripping device (504) to raise and lower the gripping device when so engaged. The gripping device (504) comprises an electrical energy storage device arranged to at least partly power the robotic vehicle (502).

## Description

### TECHNICAL FIELD

The disclosure relates to a robotic vehicle and a method of operating a robotic vehicle. More particularly, it relates to a robotic vehicle for use in an automated storage and retrieval system and to a method of operating a robotic vehicle in an automated storage and retrieval system.

### BACKGROUND

Traditional storage solutions usually involve the arrangement of goods on rows of shelves within a warehouse. The shelf location for each item is recorded in an inventory, and goods are retrieved from the shelves by a stock picker. The shelves are restocked and the inventory updated, as needed, as goods enter and leave the warehouse.

Warehouse workers may be assisted by robotic pickers and by automated inventory management systems. Automated transit systems may also be implemented in traditional warehouse set-ups to move goods from their inventory location to a picking and/or packing station.

An alternative to a traditional warehouse set-up is an automated storage and retrieval system in which robots retrieve items from their logged location within the warehouse and deliver the items to a packing station or port. Such systems can reduce or eliminate the space needed to pass between rows of shelves to access stock, thereby removing the need for broad aisles within the warehouse. One example of such a system involves placing goods in bins or containers that are configured to be stacked, side by side, within a three-dimensional grid. A rail system is arranged on top of the grid, along which robotic container-handling vehicles configured to lift containers from the grid can travel. The container-handling vehicles are configured to transport containers from the grid and to deliver them to ports or stations at the periphery of the grid so that the goods within the container can be picked and packed.

The robotic container-handling vehicles have rechargeable batteries on board to provide power to the vehicles for their operation. Before the battery becomes fully discharged by operation of the vehicle, the vehicle moves to a charging station to recharge the battery. When the battery is fully recharged, the vehicle leaves the charging station and continues with its normal operation of handling containers. While the vehicle is recharging in this way, it is not available to handle containers. Thus, either additional robotic container-handling vehicles must be deployed during that time to handle the containers that would have been handled by the re-charging vehicle or fewer container-handling operations can be carried out. Either effect is a drawback.

One or more aspects of the invention are set out in the claims.

### BRIEF DESCRIPTION OF THE DRAWINGS

The disclosure will now be described in more detail in connection with a number of exemplary embodiments shown in the accompanying drawings, in which:
Fig. 1 shows a perspective view of an existing storage system comprising a grid and a plurality of robotic container-handling vehicles configured to retrieve and/or rearrange goods stored within the grid;
Fig. 2 shows a top view of the system of Fig. 1;
Fig. 3A shows a side view of an existing first robotic container-handling vehicle suitable for use in the system of Fig. 1;
Fig. 3B shows a side view of an existing second robotic container-handling vehicle suitable for use in the system of Fig. 1;
Fig. 3C is a perspective side view of the robot of Fig. 3B;
Fig. 3D is an underneath perspective view of the robot of Fig. 3B and Fig. 3C;
Fig. 3E is a perspective view of the robot of Fig. 3A;
Fig. 4 shows an existing computing device for implementing the operations described herein; and
Fig. 5 shows a perspective, schematic view of a robotic container-handling vehicle, based on the first vehicle shown in Fig. 3A and modified to embody this invention.

### DETAILED DESCRIPTION

In overview, this disclosure relates to an automated storage system in which a robotic container-handling vehicle uses a gripping device to pick up, move and put down containers in a container-handling operation. In a modification described herein, rather than the robotic vehicle taking time out from this operation to visit a charging station and re-charge an on-board battery, the robot vehicle is modified such that the gripping device also serves as a swapable battery to power the robot. The gripping device, as well as comprising existing elements for gipping and lifting containers, also contains a rechargeable battery housed within the gripping device. Furthermore, the robot is modified to contains an engagement device that engages the gripping device for raising and lowering the gripping device in normal container-handling operations. However, the engagement device releasably engages the gripping device so that the gripping device (and its on-board battery) can be swapped with other gripping devices (each with its own on-board battery) from a stack of such gripping devices. When the battery of a gripping device being used by the robot is discharged, or close to being discharged, the robot deposits the gripping device on a stack of like gripping devices for recharging. The robot, using an on-board store of electrical energy for use during this swapping, can then move to another stack of charged gripping devices, pick up the top gripping device from the stack, using the engagement device, and then carry on with its normal container-handling operations. In this way, downtime away from container-handling operations due to the need to recharge an on-board battery by visiting a charging station, is removed. Thus, fewer robotic vehicles are needed and/or more container handling operations can be completed. It will be understood this reduces the cost of and/or increases the productivity of the system.

### Automated storage and retrieval system overview

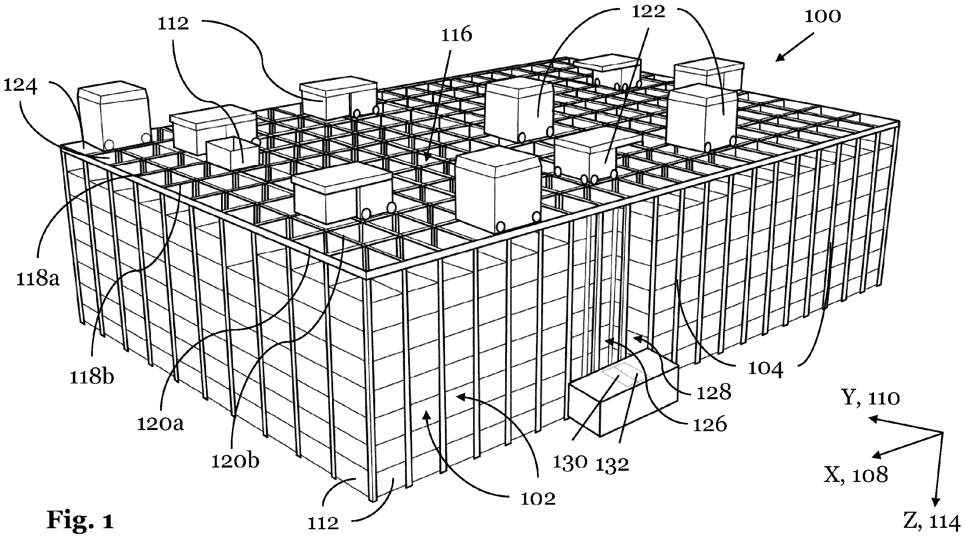

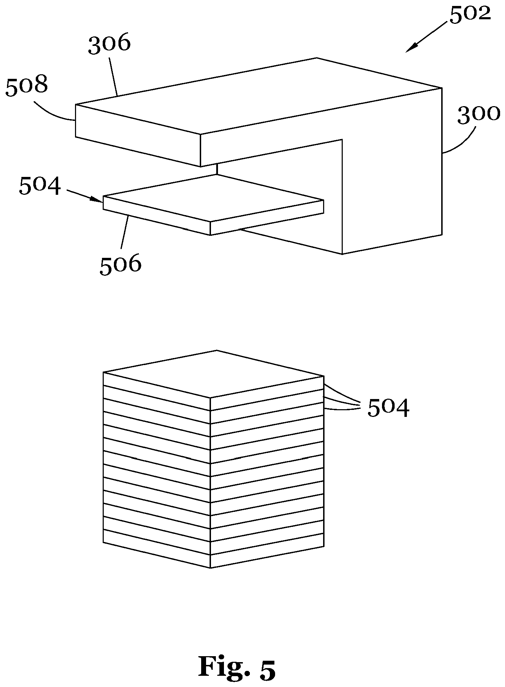

Fig. 1 to Fig. 4 show an existing storage system. This will first be explained so that embodiments of the invention, which are modifications to existing the system but which use many of the elements of the existing system of Fig. 1. The description of those embodiments starts with the description with reference to Fig. 5. Before that, and with reference to Fig. 1, a grid 100 comprises a frame formed by a plurality of generally rectilinear, adjacent vertical columns 102 formed between vertical frame members 104 and extending in the X and Y directions 108, 110. The grid elements may be fabricated of any appropriate material; for example, the frame members may be formed of extruded aluminium. Storage containers or bins 112 are stacked on top of each other, preferably in a self-supporting manner, in the Z direction 114 in the columns 102, forming a storage volume of storage cells for respective bins 112 extending in the X, Y and Z directions 108, 110, 114.

A rail system or network 116 is formed on top of the grid 100 and comprises pairs of vehicle rails or tracks 118a, 118b and 120a, 120b, respectively extending in the X and Y directions 108, 110. Robotic container-handling vehicles, or robots, 122, which can be of a range of size, shape and function, are provided and configured to run on the rails 118, 120 and to transport bins 112 in both the X and Y directions 108, 110. The robots 122 are additionally configured to lift and lower bins 112 from/into the columns 102 in the Z direction 114, the bins 112 optionally being guided by the vertical frame members 104. The robots 122 access the bins 112 via access openings 124 above the columns 102 and formed between the rails 118, 120.

Some columns 102 may be used for alternative purposes than bin storage. For example, port columns 126, 128 comprise port or access columns allowing transfer of a bin 112 in and/or out of the grid 100. Port columns 126, 128 provide a vertical channel for lifting of a bin 112 from, or lowering of a bin 112 to, a port or ports 130, 132. The ports 130, 132 are shown in Fig. 1 at the lowest level of the grid, however ports can be located at any vertical position along the column. The respective port columns 126, 128 can be assigned for removing ('drop-off) and/or returning or delivering ('pick-up') bins 112 from/to the grid 100. The ports 130, 132 are therefore configured to allow bins 112 to be removed and reintroduced (horizontally) into the associated port column. As such, a port 130, 132 can comprise a conveyor (not shown in Fig. 1) onto which a bin 112 may be lowered and transported horizontally out of the port column. The port columns 126, 128 include an opening or access point through which bins 112 can enter and leave the column.

Bins 112 can be transported along the top of the grid 100 to and/or from a port column 126, 128 by robots 122, and from a port 130, 132 to a location outside the grid 100, which may be an access station (not shown) for processing of the bin 112 or its contents, such as a picking station for adding content to, or removing content from, the bin 112. In alternative examples (not shown), the bin 112 may be transported to a port of another grid on the same or another level, or to an external facility. Transport of bins 112 to and from ports 130, 132 may be by any appropriate means (not shown) including conveyors, transport vehicles, lifts or robots.

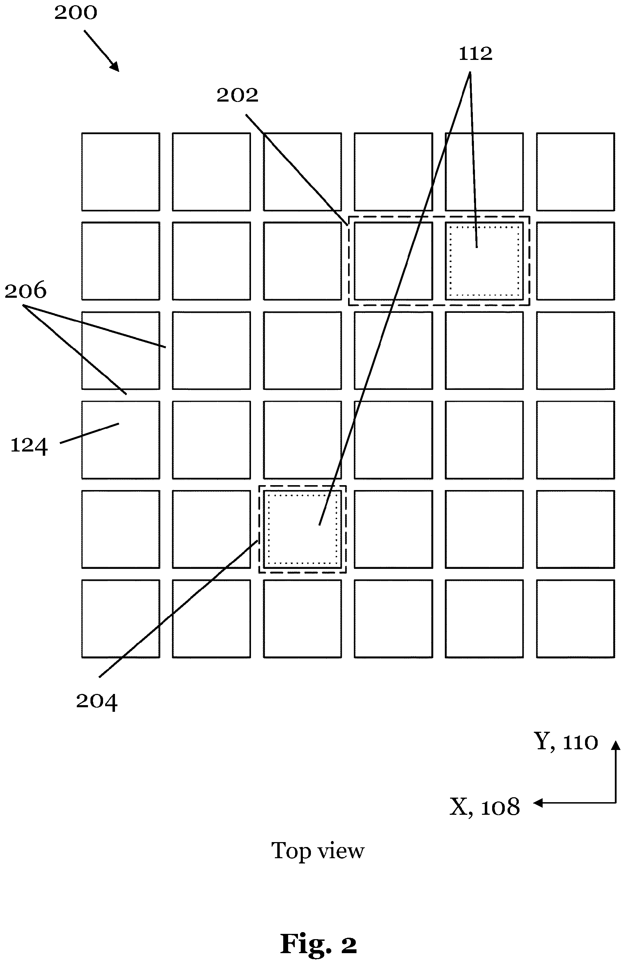

Referring to the arrangement shown in Fig. 2, the X-Y configuration 200 of the rail system 116 can be seen in more detail, together with robots 202, 204 of different types. The rail system includes rails 206 defining between them vertical column access openings 124 for access to bins 112. The rails 206 can be any appropriate type for permitting travel of the robots 202, 204 in the X and Y directions 108, 110 thereon, including (not shown) groove-type rails for receiving vehicle wheels, or protrusion-type rails for engaging wheel recesses. Each rail 206 may comprise a single track or multiple parallel tracks in each of the X and Y directions 108, 110.

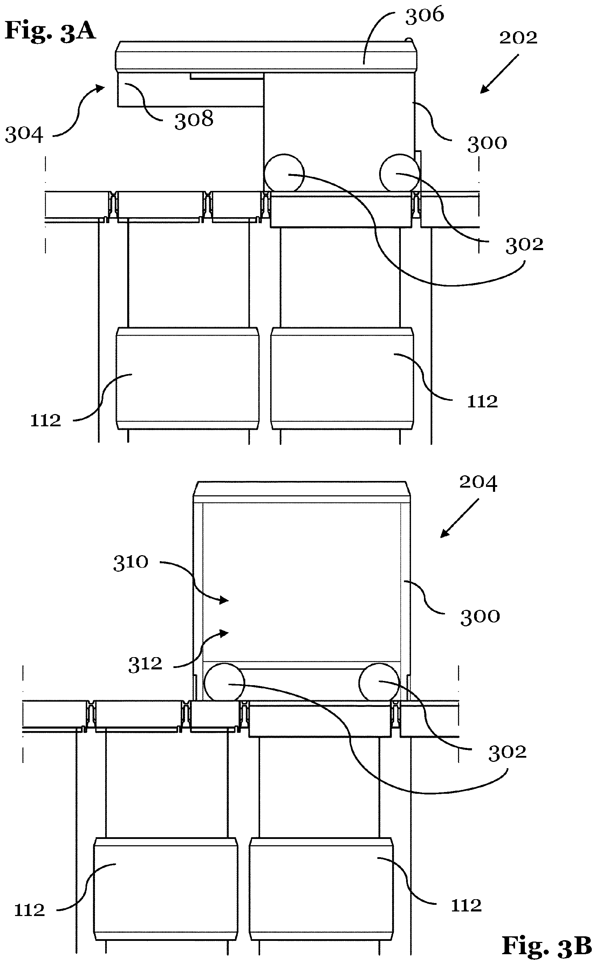

A first, 'cantilever' type of robot 202 is shown in more detail in Fig. 3A and includes a body 300, a set of wheels 302 and a lifting device 304. The body 300 contains operational equipment (not shown) for the robot 202 including drive, power and control systems. The wheels 302 permit movement of the robot 202 in one of the X and Y directions, an additional set of wheels (not visible in this view) permitting movement in the other of the X and Y directions, in both cases along the respective rails or tracks 206. One or both sets of wheels can be raised or lowered to permit selective engagement of the rails for movement in the desired direction. The lifting device 304 includes a cantilever element 306 extending in the X-Y plane from the top of the body 300, and a gripping device 308, which is raisable and lowerable from the cantilever element 306. The gripping device 308 is configured to grip or engage a bin 112; for example, by gripping a part of the bin 112, or by passively or actively engaging a suitably configured part of the bin 112.

A second, 'internal cavity' type of robot 204 is shown in more detail in Fig. 3B and includes, as an alternative to the cantilevered lifting system, an internal cavity 310 within the body 300 and in which the lifting device 312 including a gripping device (not shown) is located. In this case, the body 300 includes the robot's operational equipment and a storage space for one or more bins 112, for use, for example, while transporting the bin 112.

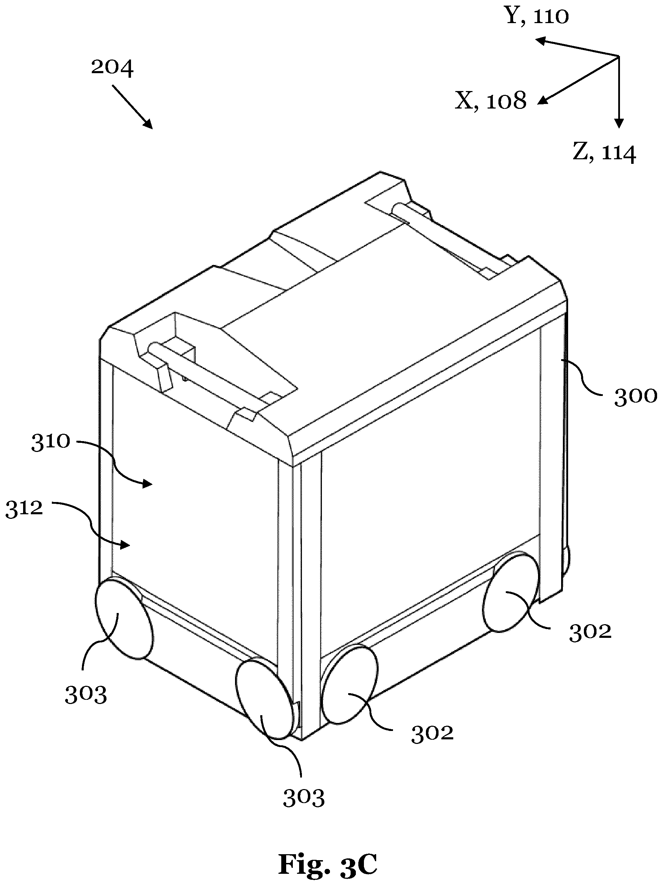

Fig. 3C shows a perspective side view of the robot of Fig. 3B in which the first set of wheels 302 from Fig. 3B are visible. The additional set of wheels referenced above but not shown in Fig. 3B are shown as wheels 303 in Fig. 3C. The additional set of wheels 303 is arranged perpendicular to the first set of wheels 302, to allow rolling of the robot 204 in the X and Y directions on the first and second set of wheels 302, 303 respectively. The first and second set of wheels 302, 303 shown in Fig. 3C may be configured to be independently lowered into engagement with the rails (and conversely raised out of engagement with the rails) to allow the robot 202 to move in the X and Y direction across the arrangement of rails shown in Fig. 2. Although the perspective view shown in Fig. 3C is of the robot 204 of Fig. 3B, it will be appreciated that a similar perpendicular wheel arrangement may be applied to the robot 202 of Fig. 3A.

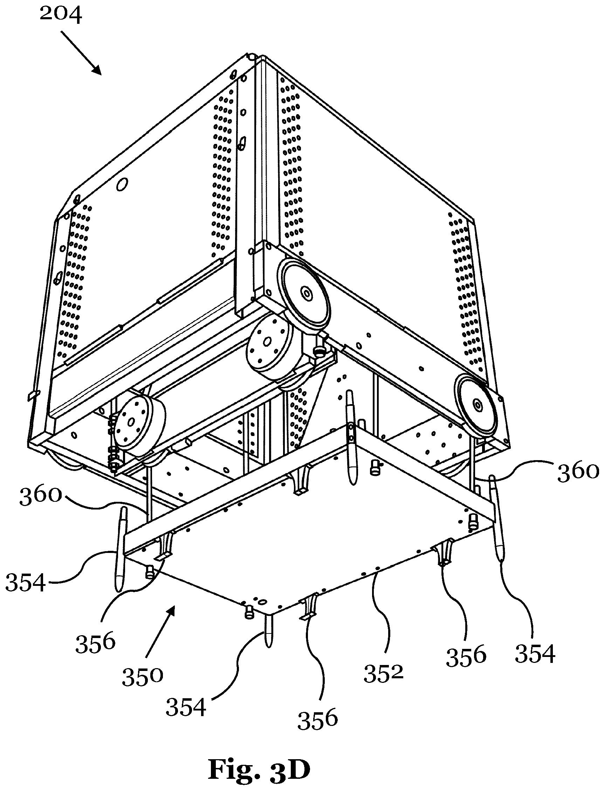

Fig. 3D shows a perspective view of the internal cavity type of robot 204 shown in Fig. 3C. The gripping device 350 of the robot 204 can be seen in Fig. 3D and will now be explained. With continued reference to Fig. 3D, the gripping device 350 includes a platform 352 extending in the X and Y plane and that is rectangular when viewed in the Z direction. The gripping device 350 also includes a plurality of engagement fingers in the form of four location fingers 354 and four pairs of latching fingers 356.

Each of the location fingers 354 is a downwardly projecting spike, projecting from the platform 352 in the Z direction and mounted at a respective corner of the platform 352. The location fingers 354 are sized, shaped and positioned to slide over and locate the corners of a bin 112 when the gripping device 350 is lowered to a bin 112 to engage it for lifting. When so engaged, an outside surface of each bin corner abuts a respective one of the location fingers 354, thereby being located relative thereto in the X-Y plane.

Each pair of latching fingers 356 has a downwardly projecting portion projecting in the Z direction with a sideways projecting portion on the end of each finger of the pair. The sideways projecting portions of each pair project away from each other in the X-Y plane. The latching fingers 356 are sized, shaped and positioned to be inserted in an aperture formed in structure of the bin 112 when the gripping device 350 is lowered to the bin 112 to engage it for lifting. The latching fingers are also arranged to be operated to pivot the latching fingers 356 of each pair apart so that the sideways projecting portion of each pair moves apart to latch around cooperating structure (not shown) of the bin 112, thereby engaging the bin 112 for lifting with the gripping device 350 by operating the lifting device 312.

Fig. 3D shows elongate flexible members 360 of the lifting device 312. The elongate flexible members 360 are four cables 360. A respective cable 360 is anchored to the platform 352 of the gripping device 350 towards each corner of the platform 352. The other end of each cable 360 is connected to structure (not shown) of the lifting device 312 for winding in and winding out the cables 360, thereby raising and lowering the gripping device 350 and any bin 112 with which it is engaged.

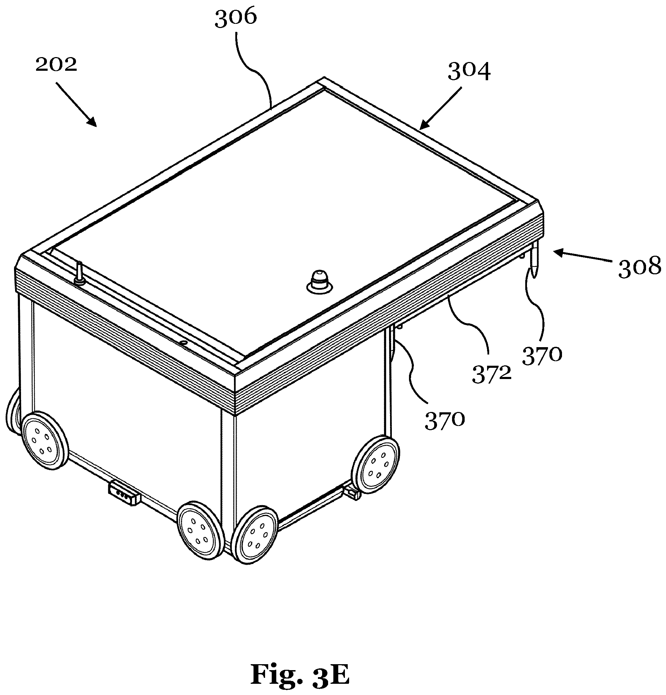

Fig. 3E shows a perspective view of the cantilever-type robot 202 of Fig. 3A. In Fig. 3E, some of the detail of the gripping device 308 shown only schematically in Fig. 3A can be seen. With continued reference to Fig. 3E, the gripping device 308 is substantially the same as the gripping device 350 of the internal cavity type robot 204 described above with reference to Fig. 3D. Specifically, the gripping device 308 of the cantilever-type robot 202 includes a platform, location fingers and latching fingers as in the gripping device 350, all arranged in substantially the same way and for use in the same way. Only the location fingers 370 and the platform 372 of the gripping device 308 of the cantilever-type robot 202 can be seen in Fig. 3E. The gripping device 308 is similar attached to the lifting device 304 by four cables (not show).

### Control and monitoring system

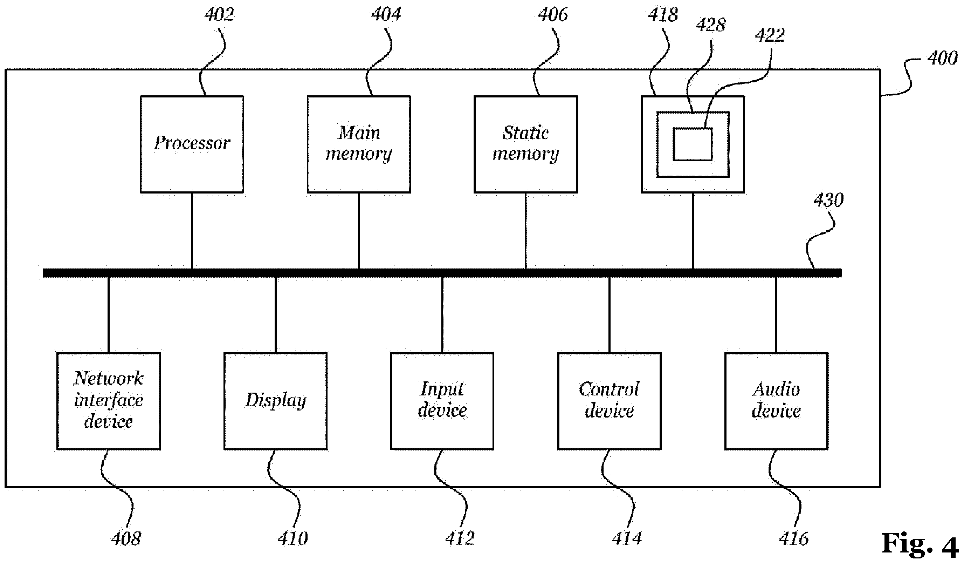

Control and monitoring of the automated storage and retrieval system, including monitoring and storing bin position and controlling bin delivery, retrieval and transport and robot routing and collision avoidance, is performed by a control system shown in Fig. 4 in communication with the robots and/or other controllable system components. Control can be performed locally or remotely and may be implemented by a processing system, for example in the form of a computing device. Accordingly, the methods described herein may form all or part of a computer-implemented method, or a system configured to perform the methods described herein.

With reference to Fig. 4, a processing system 400 suitable for carrying out the methods described herein will now be described. Fig. 4 shows a block diagram of one implementation of a processing system 400 in the form of a computing device within which a set of instructions for causing the computing device to perform any one or more of the methods described herein may be executed. In some implementations, the computing device may be connected (e.g., networked) to other machines in a Local Area Network (LAN), an intranet, an extranet, or the Internet. The computing device may operate in the capacity of a server or a client machine in a client-server network environment, or as a peer machine in a peer-to-peer (or distributed) network environment. The computing device may be a personal computer (PC), a tablet computer, a set-top box (STB), a Personal Digital Assistant (PDA), a cellular telephone, a web appliance, a server, a network router, switch or bridge, or any machine capable of executing a set of instructions (sequential or otherwise) that specify actions to be taken by that machine. Further, while only a single computing device is illustrated, the term 'computing device' shall also be taken to include any collection of machines (e.g., computers) that individually or jointly execute a set (or multiple sets) of instructions to perform any one or more of the methods described herein.

The example processing system 400 includes a processor 402, a main memory 404 (e.g., read-only memory (ROM), flash memory, dynamic random-access memory (DRAM) such as synchronous DRAM (SDRAM) or Rambus DRAM (RDRAM), etc.), a static memory 406 (e.g., flash memory, static random-access memory (SRAM), etc.), and a secondary memory (e.g., a data storage device 418), which communicate with each other via a bus 430.

Processor 402 represents one or more general-purpose processors such as a microprocessor, central processing unit, or the like. More particularly, the processor 402 may be a complex instruction set computing (CISC) microprocessor, reduced instruction set computing (RISC) microprocessor, very long instruction word (VLIW) microprocessor, processor implementing other instruction sets, or processors implementing a combination of instruction sets. Processor 402 may also be one or more special-purpose processors such as an application specific integrated circuit (ASIC), a field programmable gate array (FPGA), a digital signal processor (DSP), network processor, or the like. Processor 402 is configured to execute the processing logic (instructions 422) for performing the operations and steps described herein.

The processing system 400 may further include a network interface device 408. The processing system 400 also may include any of a video display unit 410 (e.g., a liquid crystal display (LCD) or a cathode ray tube (CRT)), an alphanumeric input device 412 (e.g., a keyboard or touchscreen), a cursor control device 414 (e.g., a mouse or touchscreen), and an audio device 416 (e.g., a speaker).

It will be apparent that some features of the processing system 400 shown in Fig. 4 may be absent. For example, the processing system 400 may have no need for display device 410 (or any associated adapters). This may be the case, for example, for particular server-side computer apparatuses which are used only for their processing capabilities and do not need to display information to users. Similarly, user input device 412 may not be required. In its simplest form, processing system 400 comprises processor 402 and main memory 404.

The data storage device 418 may include one or more machine-readable storage media (or more specifically one or more non-transitory computer-readable storage media) 428 on which is stored one or more sets of instructions 422 embodying any one or more of the methods or functions described herein. The instructions 422 may also reside, completely or at least partially, within the main memory 404 and/or within the processor 402 during execution thereof by the processing system 400, the main memory 404 and the processor 402 also constituting computer-readable storage media 428.

The various methods described herein may be implemented by a computer program. The computer program may include computer code arranged to instruct a computer to perform the functions of one or more of the various methods described herein. The computer program and/or the code for performing such methods may be provided to an apparatus, such as a computer, on one or more computer-readable media or, more generally, a computer program product. The computer-readable media may be transitory or non-transitory. The one or more computer-readable media could be, for example, an electronic, magnetic, optical, electromagnetic, infrared, or semiconductor system, or a propagation medium for data transmission, for example for downloading the code over the Internet. Alternatively, the one or more computer-readable media could take the form of one or more physical computer-readable media such as semiconductor or solid-state memory, magnetic tape, a removable computer diskette, a random-access memory (RAM), a read-only memory (ROM), a rigid magnetic disc, or an optical disk, such as a CD-ROM, CD-R/W or DVD.

The computer program is executable by the processor 402 to perform functions of the systems and methods described herein.

In an implementation, the modules, components, and other features described herein can be implemented as discrete components or integrated in the functionality of hardware components such as ASICS, FPGAs, DSPs, or similar devices.

A 'hardware component' is a tangible (e.g., non-transitory) physical component (e.g., a set of one or more processors) capable of performing certain operations and may be configured or arranged in a certain physical manner. A hardware component may include dedicated circuitry or logic that is permanently configured to perform certain operations. A hardware component may be or include a special-purpose processor, such as a field programmable gate array (FPGA) or an ASIC. A hardware component may also include programmable logic or circuitry that is temporarily configured by software to perform certain operations.

Accordingly, the phrase 'hardware component' should be understood to encompass a tangible entity that may be physically constructed, permanently configured (e.g., hardwired), or temporarily configured (e.g., programmed) to operate in a certain manner or to perform certain operations described herein.

In addition, the modules and components can be implemented as firmware or functional circuitry within hardware devices. Further, the modules and components can be implemented in any combination of hardware devices and software components, or only in software (e.g., code stored or otherwise embodied in a machine-readable medium or in a transmission medium).

### Operation of the automated storage and retrieval system

In operation, each bin 112 is given a unique identifier, which may be marked on the bin 112 using a computer-readable identifier (e.g., a barcode, quick-response code or radio-frequency identification tag) to ease identification of the bin 112. A database of the processing system 400 stores, in association with the unique identifier, the position and, optionally, content of each bin 112. When a bin 112 is moved (e.g., when it is retrieved from the grid 100), the database is updated to record its change in position.

When it is desired to retrieve a bin 112 from the grid 100, under control of the processing system 400, a robot 202, 204 is routed via the rail system 116 to the vertical column 102 including the storage cell where, according to the database, the bin 112 is positioned, and the lifting device 304, 312 is positioned (according to robot type) over the corresponding access opening 124, either adjacent or below the robot 202, 204. The robot 202, 204 lowers the gripping device 308, 350 which engages, grips and lifts the bin 112 to the robot 202, 204. The robot 202, 204 then transports the bin 112, for example, to the drop-off port column 126, 128 for delivery to the port 130, 132 and subsequent processing external to the grid 100. In the event that the target or designated bin 112 is below other bins in the stack then the robot 202, 204 or multiple robots, which may be dedicated to the task, are controlled in a 'digging' operation to sequentially lift and reposition, temporarily or permanently, bins above the target bin 112 in order for it to be retrieved. It will be appreciated that other operations in relation to the bin 112 can be carried out in a similar manner. For example, a bin 112 can be delivered for storage in the grid 100 at the port 130, 132 of the pick-up port column 126, 128, gripped and lifted by a robot 202, 204 and delivered to the desired storage cell, bins above the desired position being repositioned if necessary as discussed above.

### Description of specific improvements

A system will now be described that is the same as the system described above with reference to Fig. 1 to Fig. 4 and as show in those figures, but which has been modified and improved in some areas. The modifications and improvements will be described with reference to Fig. 5, it being understood that other elements of the system of Fig. 1 to Fig. 4 are carried over and unchanged, unless where needed to accommodate the modifications.

Fig. 5 shows a modified robot 502 of the cantilever-type of robot 202 described above with reference to Fig. 3A and 3E. The modified robot 502, which will now be referred to as 'the robot 502', is substantially the same as the previously-described robot 202 except in the areas that will now be described.

The modified robot 502 has the body 300 and the set of wheels 302 (not shown in Fig. 5) of the unmodified robot 202. The body 300 of the modified robot 502 again contains operational equipment (not shown) for the robot including drive, power and control systems. The wheels 302 permit movement of the modified robot 502 in one of the X and Y directions, an additional set of wheels (not shown) permitting movement in the other of the X and Y directions, in both cases along the respective rails or tracks 206 (not shown in Fig. 5). One or both sets of wheels can be raised or lowered to permit selective engagement of the rails for movement in the desired direction. The modified robot 502 also includes the cantilever element 306 of the unmodified robot 202 extending in the X-Y plane from the top of the body 300. So far, no modifications are made.

The modified robot 502 does however have a modified gripping device 504 which is shown schematically in Fig. 5 without some of its detail. The gripping device 504 includes a platform 506 in which is housed an electrical energy storage device in the form of a rechargeable battery (not shown). The battery is for powering the modified robot 502 in normal use. The platform 506 of the modified robot 502 is, as in the unmodified robot 202, a platform extending in the X and Y plane and that is rectangular when viewed in the Z direction.

The gripping device 504 of the modified robot 502 also has engagement fingers in the form of location fingers (not shown) and latching fingers (not shown) that are the same as those of the gripping device 308 of the unmodified robot 202, all arranged in substantially the same way and for use in the same way as previously described.

Instead of being directly attached to cables of a lifting device as previously described, the gripping device 504 of the modified robot is attached to an engagement device in the form of a frame (not shown) of a lifting device 508 of the modified robot 502. The frame is rectangular and of a size and shape to fit against the uppermost face of the gripping device 504. The frame is also provided with engagement fingers (not shown) to engage the gripping device 504. In turn, the gripping device 504 is arranged to be engaged by those engagement fingers. The engagement fingers of the frame are the same arrangement of location fingers and latching fingers as on the gripping device 504 and are operable in the same way for the frame to engage the gripping device 504.

The frame is attached to cables (not shown) of the lifting device 508 by four cables in the manner described with reference to the unmodified robot 202.

A stack of the modified gripping devices 504 is shown in Fig. 5. Each gripping device 504 is substantially the same size and shape, and the same in other necessary ways, as each other so that they are operationally interchangeable. Furthermore the gripping devices 504 are shaped so that they can be stacked, one on top of the other, for example by the engagement fingers on the gripping devices 504 engaging with the gripping device 504 immediately therebelow.

Operation of the modified robot 502 of the modified system will now be described. With reference to Fig. 5, the robot 502 that is powered by the battery in the gripping device 504 senses that the battery has discharged to a state that it should be swapped for another battery with a higher state of charge so that the robot 502 can continue with its normal container-handling operations.

Upon sensing this, a positioning step is carried out in which the robot 502 is operated to move to position in which the gripping device 504 is positioned above a vertical column 102 of the grid 100 in which is stored a stack of like gripping devices 504 positioned on a charging station (not shown) for recharging. The stack is shown schematically in Fig. 5.

A lowering step is then carried out in which the lifting device 508 is operated to lower the gripping device 504 from the body of the robotic device 502 onto the stack of recharging gripping devices 504.

A disengagement step is then carried out in which the frame disengages the gripping device 504 by unlatching the latching fingers such that the gripping device 504 is no longer held to the engagement device, thereby depositing the gripping device on top of the stack of recharging gripping devices. The lifting device is then operated to raise the frame up to the body 300 of the robot 502 so that it is clear of structure of the grid 100.

A re-positioning step is then carried out in which the robot 502 is re-positioned on the grid 100 so that the frame is positioned above another vertical column 102 of the grid 100 in which is stored a stack of like gripping devices 504 that have recharged, or of which at least the uppermost gipping device 504 of the stack has recharged.

A lowering step is then carried out in which the lifting means 508 is operated to lower the frame to the uppermost recharged gripping device 504 of the stack and the engagement fingers of the frame are operated to engage that recharged gripping device 504. Thus, the recharged electrical energy storage device of the recharged gripping device 504 is connected to power the robot 502.

A raising step is then carried out in which the lifting means 508 raises the recharged gripping device 504 towards the body 300 so the robot 502 can then continue with normal container-handling operations to select, grip, raise, move, lower and deposit bins 112 as previously described.

Although not shown in the drawings, it is also envisaged that these modifications be applied to the internal cavity type of robot 204 described above with reference to Fig. 3B. It is also envisaged that both the robot 502 and the modified version of the robot 204 would be provided with on-board electrical energy storage means, such as capacitors or a battery (not shown), for use in powering the robot 502, 204 when the robot 502, 204 is temporarily disconnected from the battery within a gripping device 504 during swapping of a discharged gripping device 504 for a charged one 504.

### Additional disclosure

In one aspect of this invention, there is provided a robotic vehicle for use in an automated storage and retrieval system, the robotic vehicle comprising a body, a lifting device and a gripping device, wherein:
the lifting device is arranged to lower the gripping device from the body and raise the gripping device towards the body; and
the gripping device is arranged to engage and disengage a container to raise and lower the container with the gripping device when so engaged;
wherein, the lifting device comprises a engagement device for releasably engaging the gripping device to raise and lower the gripping device when so engaged, and the gripping device comprises an electrical energy storage device arranged to at least partly power the robotic vehicle.

The engagement device and the gripping device may each comprise substantially the same engagement structure, the engagement structure of the engagement device being for engaging the gripping device, and the engagement structure of the gripping device being for engaging the container.

The engagement device may comprise a frame, the engagement structure being mounted to the frame. The engagement structure may comprise a plurality of engagement fingers projecting from the frame, the engagement fingers arranged to engage the gripping device. The engagement fingers may engage the gripping device around its periphery. The engagement fingers may comprise a plurality of location fingers arranged to provide location of the gripping device relative to the engagement device. The engagement fingers may comprise a plurality of latching fingers arranged to latch on to structure of the gripping device. The latching fingers may be arranged to move between a position in which the latching fingers can be inserted past cooperating structure of the gripping device and a position in which the latching fingers latch around structure of the gripping device to engage it for lifting.

The engagement device may be connected to the ends of elongate flexible members of the lifting device. The elongate flexible members may be cables that can be wound out and wound in to respectively lower and raise the engagement device from and towards the body.

The engagement structure of the gripping device may comprise a plurality of engagement fingers projecting from the gripping device, the engagement fingers arranged to engage the container. The fingers may be arranged, selectively, to engage and disengage the container. The engagement fingers may engage the container around its periphery. The engagement structure of the gripping device may also comprise a plurality of the location fingers and a plurality of the latching fingers. The latching fingers of the gripping device may be arranged to latch on to structure of the container. The latching fingers may be arranged to move between a position in which the latching fingers can be inserted past cooperating structure of the container and a position in which the latching fingers latch around structure of the contain to engage it for lifting.

The gripping device may house the electrical energy storage device. The electrical energy storage device may be contained within the gripping device. The electrical energy storage device may be rechargeable. The electrical energy storage device may comprise a battery. The electrical energy storage device may comprise a capacitor.

The gripping device and the engagement device may each comprise electrical contacts arranged to make electrical contract when the gripping device is engaged by the engagement device to provide electrical energy from the electrical energy storage device to the engagement device, thereby at least partly powering the robotic vehicle.

The gripping device may be arranged for stacking on another substantially identical gripping device. In other words, the gripping device is shaped and configured to stack on top of another gripping device of substantially the same shape and configuration. The gripping device may comprise electrical contacts on opposite sides therefore arranged such that when the device is stacked on another substantially identical gripping device the contacts on one side of the gripping device are in electrical contact with contacts on the other side of the other substantially identical gripping storage device. In this way, the electrical energy storage device in the gripping device may be charged by the other electrical storage device in the other gripping device and/or by a supply of electrical energy to which that other gripping device is connected.

By providing a gripping device that is also a store of electrical energy, for example a rechargeable battery, for operating the robotic vehicle, and by providing for the gripping device to be releasably engaged by the engagement device of the lifting device, the robotic vehicle is able to swap like gripping devices - and hence electrical energy storage devices - when the electrical energy storage device discharges. Thus, the robotic vehicle can continue its normal operation without needing to spend time re-charging. The swapable gripping devices - which each include the electrical energy storage device - can also be stacked, picked up and moved around like stacks of like containers.

The robotic vehicle may comprise a storage space arranged to receive the container when engaged by the gripping device and the gripping device is raised to the body.

In a second aspect of this invention, there is provided a method of operating a robotic vehicle in an automated storage and retrieval system, the robotic vehicle comprising a body, a lifting device and a gripping device, the gripping device arranged to engage and disengage a container to raise and lower the container with the gripping device when so engaged; wherein the gripping device comprises an electrical energy storage device arranged to at least partly power the robotic vehicle; the method comprising the step of:
swapping the gripping device for another gripping device that comprises another electrical energy storage device arranged to at least partly power the robotic vehicle, the other gripping device also being arranged to engage and disengage a container to raise and lower the container with the other gripping device when so engaged.

The method may comprise a positioning step in which the robotic vehicle is operated to position the gripping device above another gripping device that is like or substantially the same as the gripping device. The other gripping device may be the uppermost one of a stack of other gripping devices.

The method may comprise a lowering step in which the lifting device is operated to lower the gripping device from the body of the robotic device. This may be after the positioning step and this may be before the swapping step. The lowering step may comprise lowering the gripping device onto another gripping device like or substantially the same as the gripping device.

The lifting device may comprise an engagement device for releasably engaging the gripping device and the swapping step may comprise a disengagement step in which the engagement device disengages the gripping device such that the gripping device is no longer held to the engagement device. This disengagement may deposit the gripping device on top of a stack of like gripping devices, that is gripping devices that are substantially the same so as to be stackable.

The method may include a re-positioning step in which the robotic vehicle is re-positioned so that the engagement device is positioned above a further gripping device. The further gripping device may be the uppermost one of another stack of like gripping devices. The further gripping device may comprise a further electrical energy storage device that is charged or in a higher state of charge than the electrical energy storage device that it replaces by swapping.

The method may include a further lowering step in which the engagement device is lowered to the further gripping device and the engagement device is operated to engage the further gripping device and so the electrical energy storage device of the further gripping device at least partly powers the vehicle.

The method may comprise the a raising step of the lifting means raising the further gripping device towards the body so the robotic vehicle can then continue with normal container-handling operations.

The robotic vehicle may carry out steps of this method in response to sensing that the electrical energy storage device has become discharged, for example by sensing that the state of charge of the electrical energy storage device drops below a predetermined level.

The robotic vehicle of the second aspect may be the robotic vehicle of the first aspect and so it is envisaged that the features and optional features of the first aspect may also be features and optional features of the second aspect.

In a third aspect of this invention, there is provided a computer program product comprising code portions which when executed by a computer processing device of an automated storage and retrieval system, causes a robotic vehicle of that that system to carry out the method of the second aspect. The robotic vehicle may be the robotic vehicle of the first aspect.

It is to be understood that the above description is intended to be illustrative, and not restrictive. Many other implementations will be apparent to those of skill in the art upon reading and understanding the above description. Although the present disclosure has been described with reference to specific example implementations, it will be recognized that the disclosure is not limited to the implementations described, but can be practiced with modification and alteration within the spirit and scope of the appended claims. Accordingly, the specification and drawings are to be regarded in an illustrative sense rather than a restrictive sense. The scope of the disclosure should, therefore, be determined with reference to the appended claims, along with the full scope of equivalents to which such claims are entitled.

## Claims

1. A robotic vehicle for use in an automated storage and retrieval system, the robotic vehicle comprising a body, a lifting device and a gripping device, wherein:
the lifting device is arranged to lower the gripping device from the body and raise the gripping device towards the body; and
the gripping device is arranged to engage and disengage a container to raise and lower the container with the gripping device when so engaged;
wherein, the lifting device comprises an engagement device for releasably engaging the gripping device to raise and lower the gripping device when so engaged, and the gripping device comprises an electrical energy storage device arranged to at least partly power the robotic vehicle.

2. A robotic vehicle according to claim 1, wherein the engagement device and the gripping device each comprises engagement structure, the engagement structure of the engagement device being for engaging the gripping device, and the engagement structure of the gripping device being for engaging the container; and, optionally, wherein the engagement structure of the engagement device is substantially the same as the engagement structure of the gripping device.

3. A robotic vehicle according to claim 1 or claim 2, wherein the engagement device comprises a frame; and, when according to claim 2, wherein the engagement structure is mounted to the frame.

4. A robotic vehicle according to any preceding claim, wherein the gripping device houses the electrical energy storage device; and, optionally, wherein the electrical energy storage device is rechargeable.

5. A robotic vehicle according to any preceding claim, wherein the gripping device and the engagement device each comprises electrical contacts arranged to make electrical contract between the two devices when the gripping device is engaged by the engagement device to provide electrical energy from the electrical energy storage device to the engagement device, thereby at least partly powering the robotic vehicle.

6. A robotic vehicle according to any preceding claim, wherein the gripping device is arranged for stacking on another substantially identical gripping device; and, optionally, wherein the gripping device comprises electrical contacts on opposite sides thereof arranged such that, when the device is stacked on another substantially identical gripping device, the contacts on one side of the gripping device are in electrical contact with contacts on the other side of the other substantially identical gripping storage device.

7. A method of operating a robotic vehicle in an automated storage and retrieval system, the robotic vehicle comprising a body, a lifting device and a gripping device, the gripping device arranged to engage and disengage a container to raise and lower the container with the gripping device when so engaged; wherein the gripping device comprises an electrical energy storage device arranged to at least partly power the robotic vehicle; the method comprising the step of:
swapping the gripping device for another gripping device that comprises another electrical energy storage device arranged to at least partly power the robotic vehicle, the other gripping device also being arranged to engage and disengage a container to raise and lower the container with the other gripping device when so engaged.

8. A method according to claim 7 comprising a positioning step in which the robotic vehicle is operated to position the gripping device above another gripping device that is like or substantially the same as the gripping device; and, optionally, wherein the other gripping device is the uppermost one of a stack of other gripping devices.

9. A method according to claim 8 and comprising a lowering step in which the lifting device is operated to lower the gripping device from the body of the robotic device onto the other gripping device; and, optionally, wherein the lowering step is after the positioning step and optionally before the swapping step.

10. A method according to any of claim 7 to claim 9, wherein the lifting device comprises an engagement device for releasably engaging the gripping device and the swapping step comprises a disengagement step in which the engagement device disengages the gripping device such that the gripping device is no longer held to the engagement device; and, optionally, wherein this disengagement deposits the gripping device on top of a stack of like gripping devices.

11. A method according to any of claim 7 to claim 10, wherein the method comprises a re-positioning step in which the robotic vehicle is re-positioned so that the engagement device is positioned above a further gripping device; and optionally, wherein the further gripping device is the uppermost one of another stack of like gripping devices; and optionally, wherein the further gripping device comprises a further electrical energy storage device that is charged or in a higher state of charge than the electrical energy storage device that it replaces by swapping.

12. A method according to claim 11, wherein the method comprises a further lowering step in which the engagement device is lowered to the further gripping device and the engagement device is operated to engage the further gripping device and so the electrical energy storage device of the further gripping device at least partly powers the vehicle.

13. A method according to claim 12, wherein the method comprises a raising step of the lifting device raising the further gripping device towards the body so the robotic vehicle can then continue with normal container-handling operations.

14. A method according to any of claim 7 to claim 13, wherein the robotic vehicle carries out steps of this method in response to sensing that the electrical energy storage device has become discharged, for example by sensing that the state of charge of the electrical energy storage device drops below a predetermined level.

15. A computer-readable medium comprising instructions which, when executed by a processor of a device, cause the device to perform the method of any of claim 7 to claim 14.
